# FASCICULE DE BREVET EUROPEEN

(11) **EP 3 162 201 B1**
(45) Date de publication et mention de la délivrance du brevet: **29.09.2021**
(21) Numéro de dépôt: 16196665.0
(22) Date de dépôt: 31.10.2016
(51) Int. Cl.: A01L 7/00

(54) **PROCÉDÉ DE POSE D'UN FER À CHEVAL ET FER À CHEVAL POUR LA MISE EN OEUVRE DU PROCÉDÉ**
VERFAHREN ZUR ANBRINGUNG EINES HUFEISENS, UND HUFEISEN FÜR DIE UMSETZUNG DIESES VERFAHRENS
METHOD FOR FITTING A HORSESHOE AND HORSESHOE FOR IMPLEMENTING THE METHOD

(30) Priorité: 30.10.2015 FR 1560449
(43) Date de publication de la demande: 03.05.2017
(73) Titulaire: Value Feet, 33610 Canejan (FR)
(72) Inventeur: ROORYCK, Thibaut, 33610 Cestas (FR); ROORYCK, Maxime, 33610 Cestas (FR)
(74) Mandataire: Plasseraud IP

(56) Documents cités:
- EP-A2- 0 233 335
- WO-A1-01/54493
- WO-A1-02/43480
- DE-U1-202008 012 717

## Description

### ARRIERE-PLAN DE L'INVENTION

### Domaine de l'invention

La présente invention concerne un procédé de pose d'un fer à cheval comprenant au moins un pinçon formant un angle aigu avec la surface supérieure du fer à cheval.

Elle vise encore un fer à cheval pour la mise en œuvre de ce procédé.

### Arrière-plan technologique

Afin de préserver les qualités du pied d'un cheval, il est connu de protéger celui-ci en posant sur le sabot correspondant un fer à cheval.

Un fer est généralement équipé d'une ou plusieurs butées, encore appelées pinçons, lesquelles permettent au maréchal-ferrant de positionner correctement ce fer sur le pied correspondant d'un cheval.

De tels pinçons aident encore à la stabilisation du fer à cheval sur le sabot et empêchent que ce fer ne recule durant son utilisation. Ils limitent ainsi les sollicitations mécaniques sur les rivets / clous.

Une ferrure présentant deux pinçons, autorise un engagement plus important de celle-ci sous le pied du cheval, ce qui, par conséquent, limite le levier antérieur notamment sur les pieds plats. Il est encore connu qu'une telle ferrure assure un maintien d'une boîte cornée ayant tendance à trop s'évaser.

On préfère toutefois utiliser des ferrures sans pinçon pour certaines disciplines telles que pour la course (trot et galop).

Différentes méthodes sont connues pour former un ou plusieurs pinçons sur une ferrure.

Une d'entre elles consiste à tirer chaque pinçon dans la matière constitutive de cette ferrure. Une telle méthode requiert une opération de forge pure comportant des étapes de chauffe de la ferrure puis de mise en forme du pinçon. La présente méthode peut également être réalisée à froid mais requiert des efforts plus importants

Cette solution traditionnelle s'avère longue, pénible pour le maréchal-ferrant et peu précise.

De nombreux maréchaux préfèrent, en conséquence, mettre en œuvre des ferrures sur lesquelles les pinçons sont déjà présents.

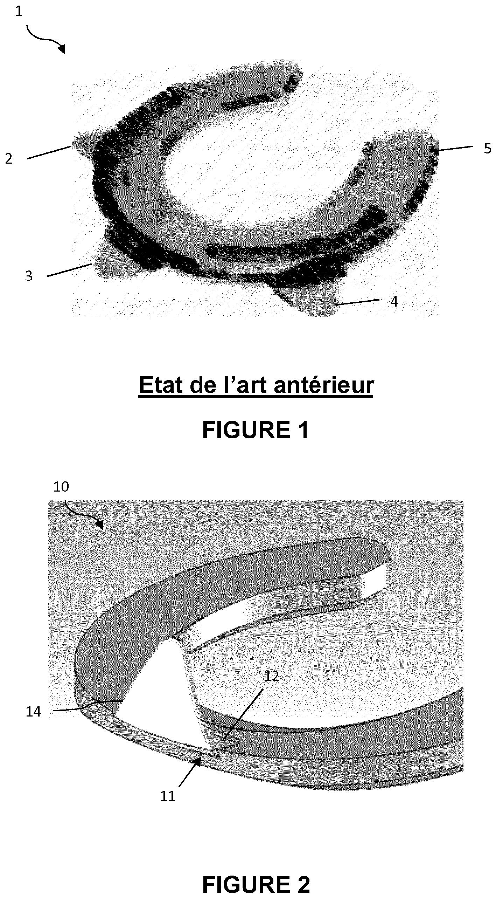

Il existe deux types de pinçons, des pinçons placés à 90 degrés du plan défini par l'armature métallique du fer 1 à cheval et, comme le montre la Figure 1, des pinçons 2-4 placés à 180 degrés. Ces pinçons 2-4 sont donc placés dans le prolongement de cette armature 5.

Ainsi, et préalablement à la pose d'un fer 1 présentant un ou plusieurs pinçons 2-4 placés à 180°, le maréchal-ferrant doit redresser ceux-ci. Un tel redressement des pinçons 2-4 est obtenu au moyen d'un marteau, cette opération délicate étant réalisée à chaud ou à froid.

Une fois le fer placé sur le sabot, par exemple, par collage ou clouage, le maréchal-ferrant peut plaquer chaque pinçon 2-4 sur le sabot, toujours à l'aide d'un marteau. Les pinçons 2-4 font partis des éléments essentiels d'une ferrure et leur absence, en cas de rupture ou de mauvais placement, peut s'avérer problématique pour le cheval.

On constate, dans la plupart des cas, que les pinçons 2-4 se cassent lors du ferrage du cheval par le maréchal-ferrant. Cela survient assez rarement pour des ferrures en acier mais plus fréquemment pour les fers en aluminium, lesquels sont plus difficiles à chauffer. L'aluminium présente de plus des capacités de pliage moins importantes et se fissure plus facilement lors de déformations plastiques.

Or, et afin d'alléger les fers à cheval tout en assurant une tenue adéquate, les fers fabriqués en usine sont, pour un usage sportif, typiquement réalisés en aluminium, et non plus en acier.

En outre, les ferrures en aluminium ont généralement leurs pinçons placés à 180 degrés. Il est alors nécessaire de redresser la matière sur un angle supérieur à 90 degrés. Dans ces conditions, la matière est fortement contrainte mécaniquement, ce qui est encore aggravée par une chauffe difficile et imprécise.

Il est donc difficile d'obtenir des pinçons résistants.

Ainsi, les procédés de pose impliquant de redresser le ou les pinçons sur une large plage angulaire pour placer celui-ci ou ceux-ci à proximité du sabot fragilisent le pinçon ou les pinçons. De plus, il est difficile avec ces procédés de pose de garder chaque pinçon à proximité immédiate du sabot du cheval. Il est habituel que le pinçon se redresse, laissant un espace entre le sabot et le pinçon. Le pinçon ne joue ainsi plus son rôle de butée. On observe en outre que des impuretés (résidus de boue, d'herbe, de terre...) s'insèrent dans l'espace ainsi crée pouvant causer une gêne au cheval et le blesser.

Il serait donc intéressant de pouvoir proposer un procédé de pose d'un fer à cheval permettant de placer le pinçon à proximité immédiate ou en contact avec le sabot du cheval.

On constate également que chaque pinçon étant fragilisé lors de sa manipulation pour le mettre en position, il n'est pas rare que ce dernier casse dès que le fer est sollicité.

L'autre cas de rupture des pinçons se produit lorsque le cheval se déferre ou lorsque le maréchal-ferrant retire les fers. On observe alors qu'il est impossible de reposer de tels fers, lesquels sont mis au rebus.

Par ailleurs, il est connu que la mise en œuvre de ferrures en aluminium, difficilement façonnables, peut causer une certaine gêne au cheval, notamment lorsque qu'un pied de ce dernier présente des fragilités.

Pour assurer un confort plus important au cheval, notamment en prenant en compte la morphologie de chaque pied mais également d'éventuelles pathologies associées, des procédés de fabrication de fer sur mesure ont été récemment proposés.

Ces procédés visent à réaliser des ferrures orthopédiques non plus pour une utilisation a posteriori, mais à titre préventif.

Ces ferrures sur mesure ont un coût de fabrication assez onéreux.

Il serait donc intéressant de pouvoir poser ou ajouter un pinçon sur une ferrure ou encore remplacer un pinçon endommagé sur une ferrure neuve ou peu utilisée afin de prolonger sa durée de service.

Le document DE202008012717U1 divulgue un procédé de pose d'un fer à cheval dans lequel le fer à cheval ayant une surface supérieure comporte au moins un pinçon, le pinçon comprenant une surface intérieure inclinée formant un premier angle aigu avec la surface supérieure dudit fer, on déplace le pinçon pour ouvrir l'angle formé entre ladite surface intérieure et ladite surface supérieure, de sorte qu'après ouverture, un deuxième angle formé par la surface intérieure du pinçon et la surface supérieure du fer est strictement compris entre le premier angle et 90°, pour placer le pinçon en contact ou à proximité du sabot du cheval de manière à ce que ce dernier forme butée.

DE202008012717U1 divulgue également un fer à cheval, ledit fer à cheval ayant une surface supérieure et comprenant un ou plusieurs pinçons, ledit ou au moins un desdits poinçons comprenant une surface inférieure inclinée formant un premier angle aigu avec ladite surface supérieure, ledit ou au moins un desdits pinçons appartient à un dispositif de butée, ledit dispositif de butée comportant une pièce de montage rapportée et assemblée audit fer à cheval, ladite pièce de montage supportant une languette destinée à former ledit pinçon dudit fer à cheval après assemblage du dispositif de butée audit fer à cheval, ladite pièce de montage comportant au moins une patte d'attache.

### Objet de l'invention

La présente invention vise à pallier les inconvénients de l'art antérieur et à répondre aux contraintes ci-dessus énoncées en proposant un procédé de pose d'un fer à cheval comprenant au moins un pinçon formant un angle aigu avec la surface supérieure du fer à cheval, simple dans son mode opératoire, permettant une proximité et un maintien à proximité du au moins un pinçon avec le sabot du cheval, comme défini dans la revendication 1.

Un autre objet de la présente invention est un fer à cheval pour la mise en œuvre de ce procédé, ledit fer à cheval comprenant au moins un pinçon formant un angle aigu avec la surface supérieure du fer à cheval, ledit pinçon appartenant à un dispositif de butée, comme défini dans la revendication 7.

### BREVE DESCRIPTION DE L'INVENTION

A cet effet, l'invention concerne un procédé de pose d'un fer à cheval, comme défini dans la revendication 1.

Le procédé selon l'invention permet avantageusement de déplier le pinçon afin qu'il puisse se déplacer à proximité du fer à cheval et s'adapter à la surface du sabot du cheval.

De manière préférée, on fait glisser ledit fer à cheval le long de la surface du sabot en contact avec le sol de manière à placer le pinçon au contact du sabot du cheval pour ouvrir l'angle formé entre ladite surface intérieure dudit pinçon et ladite surface supérieure dudit fer à cheval

Ainsi, et de manière avantageuse, la mise en contact de la surface du sabot du cheval avec le pinçon du fer à cheval permet de déplier le pinçon.

Typiquement, l'angle α1 est compris entre 30° et 80°.

Dans un mode de réalisation préféré, l'angle α1 est d'environ 55°.

Dans différents modes de réalisation particuliers de ce procédé de pose d'un fer à cheval, chacun ayant ses avantages particuliers et susceptibles de nombreuses combinaisons techniques possibles.

Selon l'invention le pinçon est réalisé dans un matériau thermoplastique, on chauffe préalablement ledit au moins un pinçon à une température T autorisant le déplacement du pinçon correspondant.

On entend par matériau thermoplastique, un matériau à base de polymère qui peut être mis en forme, à l'état liquide (visqueux) à une température soit supérieure à sa température de transition vitreuse (Tg) (matériau thermoplastiques amorphes) ou supérieure à sa température de fusion (Tm) (thermoplastiques semi-cristallins).

De préférence, on choisit la température T de façon à ce qu'elle soit supérieure ou égale à la température de transition vitreuse de ladite matière thermoplastique.

On entend par température de transition vitreuse (Tg), la température à laquelle se réalise le passage entre l'amorphe vitreux et l'amorphe caoutchouteux. Cette transition est réversible, ce qui permet de la déterminer par chauffage ou refroidissement du matériau.

Diverses techniques existent pour mesurer la température de transition vitreuse et sont connues de l'homme du métier. A titre d'exemple, on pourra utiliser la calorimétrie à balayage différentiel.
- Le matériau thermoplastique est choisi dans le groupe comprenant les acides polylactiques, les polyamides, l'acrylonitrile butadiène styrène, le polyéthylène téréphtalate glycolysé.

Typiquement et à titre purement illustratif, le matériau thermoplastique sera choisi parmi les acides polylactiques (PLA), les polyamides, et plus particulièrement le polyamide 6 (PA6) ou le polyamide 6/6, préférentiellement, le polyamide 6/6 est renforcé par des fibres de verre, l'acrylonitrile butadiène styrène (ABS), préférentiellement l'acrylonitrile butadiène styrène (ABS) est renforcé, et plus particulièrement renforcé par des fibres de carbone ou par des fibres d'aramide, le polyéthylène téréphtalate glycolysé (PETG), plus particulièrement le PETG renforcé par des fibres de carbone,

De manière préférée, le polymère est l'acrylonitrile butadiène styrène (ABS) renforcé par des fibres de carbone.
- de l'air chaud à au moins la dite température T est dirigé sur au moins un des pinçons.

Ainsi, et avantageusement, le procédé de pose selon la présente invention permet de déplacer au moins un des pinçons à proximité du sabot et permet d'adapter au moins un des pinçons à la morphologie du sabot.

La présente invention concerne également un fer à cheval pour la mise en œuvre du procédé précédemment décrit, comme défini dans la revendication 7.

Typiquement, l'angle α1 formé par la surface inférieure inclinée du pinçon et la surface supérieure du fer à cheval est compris entre 30 et 80°.

Préférentiellement, l'angle α1 est d'environ 55°.
- Selon l'invention, le dispositif de butée est d'un seul tenant et le dispositif de butée est réalisé dans un matériau thermoplastique tel que précédemment défini.

Typiquement le matériau thermoplastique sera choisi parmi les acides polylactiques (PLA), les polyamides, et plus particulièrement le polyamide 6 (PA6) ou le polyamide 6/6, préférentiellement, le polyamide 6/6 est renforcé par des fibres de verre, l'acrylonitrile butadiène styrène (ABS), préférentiellement l'acrylonitrile butadiène styrène (ABS) est renforcé, et plus particulièrement renforcé par des fibres de carbone ou par des fibres d'aramide, le polyéthylène téréphtalate glycolysé (PETG), plus particulièrement le PETG renforcé par des fibres de carbone,

Préférentiellement, le dispositif de butée est réalisé en acrylonitrile butadiène styrène (ABS) renforcé par des fibres de carbone.

Dans un autre mode de réalisation, la patte d'attache dudit dispositif de butée est intégralement évasée et présente sur au moins une partie de son pourtour destiné à être assemblé audit fer à cheval un contour en contre-dépouille.
- ladite au moins une patte comportant une face avant possède une épaisseur e

Typiquement, l'épaisseur e est comprise entre 2 et 3 millimètres.

Préférentiellement, l'épaisseur e est d'environ 2.5 millimètre.
- Ladite patte comportant une face avant et forme au moins un angle γ, l'angle γ étant formé entre un bord latéral de ladite patte et sa face avant, l'angle γ étant compris entre 105 et 120°.

Préférentiellement, l'angle γ est d'environ 112.5°.
- ledit contour en contre-dépouille étant défini par un angle δ, l'angle δ étant compris entre 13 et 17°.

Préférentiellement, l'angle δ est d'environ 15°.

Dans un mode de réalisation préféré, la patte d'attache possède une forme trapézoïdale.

Typiquement, le fer à cheval peut comprendre un, deux ou trois pinçons.

Dans un mode de réalisation, le fer à cheval comprend un pinçon, ledit pinçon ayant une position centrale sur le fer à cheval.

Dans un autre mode de réalisation, le fer à cheval comprend deux pinçons, lesdits pinçons étant sur les bords latéraux du fer à cheval.

Dans encore un autre mode de réalisation, le fer à cheval comprend trois pinçons, un desdits pinçon ayant une position centrale sur le fer à cheval, les deux autres pinçons étant sur les bords latéraux.

Le fer à cheval peut être un fer à cheval standard ou un fer à cheval sur mesure, ce dernier étant destiné à épouser la forme d'un sabot d'un cheval spécifique pour lequel il a été réalisé.

Ce fer à cheval peut être métallique ou composite. Dans ce dernier cas, et à titre purement illustratif, le dispositif de butée étant assemblé à la surface supérieure du fer à cheval, ce dernier comporte une ou plusieurs parties non métalliques, placées dans la partie inférieure de ce fer. Par exemple, une telle partie non métallique est réalisée dans un matériau amortissant. La structure de ces fers assure non seulement un allégement significatif de la ferrure mais permet aussi un amortissement des chocs.

Un tel fer à cheval équipé d'un ou plusieurs dispositifs de butée rapportés autorise avantageusement son déferrage pour un changement du ou d'au moins un de ces dispositifs de butée. Un tel déferrage peut être rendu nécessaire lorsque le dispositif de butée à changer est cassé ou encore, lorsqu'il est nécessaire d'avoir un pinçon plus résistant mécaniquement en raison d'un comportement particulier d'un cheval.

De préférence, pour chaque dispositif de butée, la surface externe supérieure ou inférieure dudit fer à cheval présente un évidement pour chaque patte de ladite pièce de montage correspondante, dans lequel ou chacun desquels est reçue une patte correspondante de ladite pièce de montage, chaque évidement ayant la même forme que celle de ladite patte correspondante.

Avantageusement, chaque évidement présente des dimensions, notamment une profondeur, garantissant que la surface extérieure de la patte reçue dans l'évidement correspondant ne forme pas saillie de la surface extérieure du fer à cheval mais soit de niveau ou sensiblement de niveau avec cette dernière. On évite ainsi que la présence de ce dispositif de butée cause une gêne au cheval, notamment lorsque la patte est destinée à être en contact avec le sabot de ce cheval.

De manière avantageuse, ladite ou au moins une desdites pattes d'attache étant au moins partiellement évasée et présentant sur son extérieur un contour en contre-dépouille, l'évidement est plus grand que ladite patte pour autoriser son passage et présente une géométrie complémentaire du contour en contre-dépouille de sorte que ce dernier vient en engagement dans celle-ci lorsque ladite patte est reçue dans ledit évidement.

Dans un mode de réalisation la face avant de ladite patte d'attache est destinée à être en contact avec le contour de l'évidement, et la face arrière de la patte d'attache est laissée libre, une distance d séparant la face arrière de ladite patte d'attache et le contour de l'évidement.

Typiquement, la distance d est comprise entre 1.5 et 2.5 millimètres.

Préférentiellement la distance d est d'environ 2 millimètres.

Cette distance d permet avantageusement la mise en place et le retrait du pinçon.

La distance d est par ailleurs reliée aux caractéristiques de ladite patte d'attache par la formule suivante : d = (e x TAN(δ)) / sin (γ)

Avec les caractéristiques suivantes précédemment décrites :
- l'angle γ, s'entend de l'angle formé entre un bord latéral de ladite patte d'attache et sa face avant ;
- l'angle δ de la contre-dépouille
- l'épaisseur e de la patte d'attache.

Selon l'invention, le dispositif de butée comporte une pièce de montage destinée à être rapportée et assemblée audit fer à cheval, ladite pièce de montage supportant une languette destinée à former un pinçon dudit fer à cheval après assemblage du dispositif de butée audit fer à cheval, ladite pièce de montage comportant au moins une patte d'attache.

Le dispositif de butée peut être réalisé dans une matière plastique telle qu'un plastique dur.

Selon l'invention, le dispositif de butée est réalisé dans un matériau thermoplastique tel que ci-avant décrit.

De préférence, cette languette destinée à former un pinçon est de forme triangulaire ou trapézoïdale. Elle peut être légèrement incurvée pour épouser la forme de l'ongle du cheval.

A titre purement illustratif, cette pièce de montage peut comporter deux pattes d'attache s'étendant dans un même plan horizontal en étant inclinées l'une par rapport à l'autre.

Dans différents modes de réalisation particuliers de ce dispositif de butée, chacun ayant ses avantages particuliers et susceptibles de nombreuses combinaisons techniques possibles:
- ledit dispositif de butée présentant une section, de préférence transversale, droite en forme de L, ladite ou au moins une desdites pattes d'attache présente une forme choisie dans le groupe comprenant ronde, ovale, carrée, rectangulaire, trapézoïdale et des combinaisons de ces éléments.

De préférence, ladite ou au moins une desdites pattes d'attache comportant une partie évasée, cette patte présente sur son extérieur un contour en contre-dépouille.

Dans un autre mode de réalisation, la patte d'attache dudit dispositif de butée est intégralement évasée et présente sur au moins une partie de son pourtour destiné à être assemblé audit fer à cheval un contour en contre-dépouille.

A titre purement illustratif, cette partie évasée peut résulter d'une patte ayant une forme trapézoïdale. Il peut encore s'agir d'une partie évasée à parois latérales circulaires dans le cas où cette patte présente une forme ronde.

Les caractéristiques de la patte d'attache peuvent être calculées et modulées afin d'obtenir une résistance maximale du pinçon aux différents efforts, ledit pinçon s'intégrant parfaitement au fer sans en perturber l'utilisation.

Typiquement, ces caractéristiques peuvent être les suivantes :
- l'angle γ, s'entend de l'angle formé entre un bord latéral de ladite patte d'attache et sa face avant ;
- l'angle δ de la contre-dépouille
- l'épaisseur e de la patte d'attache.

Typiquement l'angle γ est compris entre 105° et 120°.

Préférentiellement, l'angle γ est d'environ 112.5°.

Typiquement, l'angle δ est compris entre 13° et 17°.

Préférentiellement, l'angle δ est d'environ 15°.

Typiquement, l'épaisseur e est comprise entre 2 et 3 millimètres.

Préférentiellement, l'épaisseur e est d'environ 2.5 millimètre.

Dans un autre mode de réalisation préféré, la patte d'attache comprend un angle γ de 112.5°, un angle δ de 15° et une épaisseur e de 1.8 millimètres.

Ce mode de réalisation préféré permet ainsi au pinçon de s'intégrer parfaitement dans le fer sans en perturber son utilisation ainsi que de résister aux différents efforts et contraintes appliquées durant l'utilisation.
- ladite pièce de montage comporte une seule patte pourvue à son extrémité libre d'une partie filetée.

Cette partie filetée s'étend dans le sens de la longueur sur la surface circonférentielle extérieure de l'extrémité de la patte. Le fer à cheval comporte alors un trou taraudé dans le filetage est complémentaire de celui de la partie filetée de l'extrémité de la patte d'attache ainsi qu'un évidement pour accueillir une partie de la patte de sorte que sa surface extérieure ne forme pas saillie de la surface extérieure du fer à cheval mais soit de niveau ou sensiblement de niveau avec cette dernière.
- ladite pièce de montage étant une pièce présentant une section transversale droite en forme de L, elle comporte une première patte d'attache destinée à être assemblée à la face supérieure ou inférieure du fer à cheval et une deuxième patte d'attache destinée à être assemblée au pourtour extérieur du fer.

Alternativement, cette pièce de montage est une pièce métallique obtenue par pliage et ayant une section transversale droite en forme de U.
- ladite ou au moins une desdites pattes de ladite pièce de montage est malléable et/ou arrondie pour assurer sa conformation audit fer à cheval.

A titre purement illustratif, cette patte malléable et/ou arrondie est destinée à être assemblée, par exemple par soudure ou collage, au pourtour du fer à cheval lequel présente une forme courbe.

La présente invention concerne également un fer à cheval comprenant un ou plusieurs pinçons, comme défini dans la revendication 7.

Selon l'invention, ledit ou au moins un desdits pinçons appartient à un dispositif de butée tel que décrit précédemment, ledit dispositif de butée étant solidaire de ce fer à cheval.

Le fer à cheval peut être un fer à cheval standard ou un fer à cheval sur mesure, ce dernier étant destiné à épouser la forme d'un sabot d'un cheval spécifique pour lequel il a été réalisé.

Ce fer à cheval peut être métallique ou composite. Dans ce dernier cas, et à titre purement illustratif, le dispositif de butée étant assemblé à la surface supérieure du fer à cheval, ce dernier comporte une ou plusieurs parties non métalliques, placées dans la partie inférieure de ce fer. Par exemple, une telle partie non métallique est réalisée dans un matériau amortissant. La structure de ces fers assure non seulement un allégement significatif de la ferrure mais permet aussi un amortissement des chocs.

Un tel fer à cheval équipé d'un ou plusieurs dispositifs de butée rapportés autorise avantageusement son déferrage pour un changement du ou d'au moins un de ces dispositifs de butée. Un tel déferrage peut être rendu nécessaire lorsque le dispositif de butée à changer est cassé ou encore, lorsqu'il est nécessaire d'avoir un pinçon plus résistant mécaniquement en raison d'un comportement particulier d'un cheval.

De préférence, pour chaque dispositif de butée, la surface externe supérieure ou inférieure dudit fer à cheval présente un évidement pour chaque patte de ladite pièce de montage correspondante, dans lequel ou chacun desquels est reçue une patte correspondante de ladite pièce de montage, chaque évidement ayant la même forme que celle de ladite patte correspondante.

Avantageusement, chaque évidement présente des dimensions, notamment une profondeur, garantissant que la surface extérieure de la patte reçue dans l'évidement correspondant ne forme pas saillie de la surface extérieure du fer à cheval mais soit de niveau ou sensiblement de niveau avec cette dernière. On évite ainsi que la présence de ce dispositif de butée cause une gêne au cheval, notamment lorsque la patte est destinée à être en contact avec le sabot de ce cheval.

De manière avantageuse, ladite ou au moins une desdites pattes d'attache étant au moins partiellement évasée et présentant sur son extérieur un contour en contre-dépouille, l'évidement est plus grand que ladite patte pour autoriser son passage et présente une géométrie complémentaire du contour en contre-dépouille de sorte que ce dernier vient en engagement dans celle-ci lorsque ladite patte est reçue dans ledit évidement.

Dans un mode de réalisation la face avant de ladite patte d'attache est destinée à être en contact avec le contour de l'évidement, et la face arrière de la patte d'attache est laissée libre, une distance d séparant la face arrière de ladite patte d'attache et le contour de l'évidement.

Typiquement, la distance d est comprise entre 1.5 et 2.5 millimètres.

Préférentiellement la distance d est d'environ 2 millimètres.

Cette distance d permet avantageusement la mise en place et le retrait du pinçon.

La distance d est par ailleurs reliée aux caractéristiques de ladite patte d'attache par la formule suivante : d = (e x TAN(δ)) / sin (γ)

Avec les caractéristiques suivantes précédemment décrites :
- l'angle γ, s'entend de l'angle formé entre un bord latéral de ladite patte d'attache et sa face avant ;
- l'angle δ de la contre-dépouille
- l'épaisseur e de la patte d'attache.

A titre purement illustratif, la patte d'attache peut présenter une forme ronde ou trapézoïdale.

De préférence, un élément de verrouillage est placé dans ledit évidement, cet élément de verrouillage étant destiné à contraindre l'assemblage mécanique de ladite patte et dudit évidement. Cet élément de verrouillage est par exemple réalisé dans un matériau polymère. Il peut encore s'agir d'une colle ou bien de vis ou de rivets.

La présente divulgation décrit également un procédé de fabrication d'un fer à cheval. Selon ce procédé on réalise les étapes suivantes :
- former au moins un évidement dans la surface externe d'une armature métallique, ledit au moins un évidement ayant la même forme que celle d'une patte d'attache qu'il est destiné à recevoir et étant débouchant sur le pourtour de ladite armature,
- assembler dans chaque évidement, la patte d'attache correspondante d'une pièce de montage d'un dispositif de butée tel que décrit précédemment, de sorte que la languette dudit dispositif forme un pinçon dudit fer à cheval. L'assemblage peut être réalisé par soudure, collage, vissage ou encore par coopération de pièces de forme complémentaire.

Il peut s'agir d'un procédé de fabrication d'un fer à cheval sur mesure, ce fer étant destiné à épouser la forme d'un sabot d'un cheval spécifique pour lequel il a été réalisé.

De préférence, ce procédé peut comporter une étape de finition consistant en un traitement d'au moins une portion de la surface externe dudit dispositif de butée pour colorer celui-ci, ledit traitement comportant une étape d'anodisation et une étape de coloration, ou l'application d'un revêtement décoratif.

La coloration de ce dispositif de butée métallique est avantageusement obtenue par un procédé choisi dans le groupe de procédés comprenant une coloration par adsorption, une coloration électrolytique et une coloration par interférence, puis l'exposition de ladite partie métallique à un procédé de colmatage à froid et/ou un procédé de colmatage à chaud.

Le procédé de coloration par adsorption comprend l'introduction d'un colorant dans les ouvertures de pores de la couche d'oxyde de la partie métallique en aluminium, cette introduction du colorant étant effectuée par immersion ou par pulvérisation.

La mise en œuvre d'éléments organiques pour assurer la coloration permet de colorer la partie métallique ainsi traitée en rouge, bleu, vert, noir,...

Le procédé de coloration électrolytique consiste en une électrodéposition sous courant alternatif d'un sel, généralement d'étain, dans la couche anodisée. La quantité de sels déposés permet d'obtenir des couleurs allant du bronze clair au bronze foncé, bleu, vert, gris et saturation noir.

Alternativement, et selon un mode préféré de réalisation selon lequel le dispositif de butée est réalisé dans un matériau thermoplastique, préférentiellement dans un matériau polymère, la coloration dudit dispositif de butée dans un matériau polymère est obtenue par ajout d'au moins un pigment de couleur dans la formulation du matériau polymère.

A titre illustratif, lorsque la partie métallique est en aluminium, le procédé de colmatage à froid comprend l'immersion de cette partie dans une solution contenant des composés à base de fluorure ou de silice en présence de sels de nickel.

De même, lorsque la partie métallique est en aluminium, le procédé de colmatage à chaud comprend l'immersion de cette partie dans de l'eau désionisée à une température comprise typiquement entre environ 90°C et environ 100°C.

Alternativement, appliquant un revêtement décoratif, on choisit un métal précieux parmi le groupe comprenant l'Or, l'Argent, le Platine, le Palladium, le Rhodium, l'Irridium, l'Osmium, le Rhénium, le Ruthénium et/ou d'un alliage d'un de ces métaux avec un ou plusieurs autres métaux.

Cette application d'un revêtement décoratif peut nécessiter une étape préalable de préparation d'au moins ladite portion de surface externe, consistant en la formation d'une couche d'accroché pour provoquer un accrochage mécanique mutuel dudit revêtement et de ladite au moins une portion de surface.

Une ou plusieurs pierres précieuses ou semi-précieuses peuvent encore être placées sur la surface externe de chaque languette formant pinçon.

De manière avantageuse, lors de l'étape de formation dudit ou d'au moins un desdits évidements, on a conféré au moins une dimension plus grande audit évidement que celle de la patte qu'il est destiné à recevoir, pour autoriser le passage de celle-ci, cet évidement présentant de plus une géométrie complémentaire du contour en contre-dépouille de cette patte.

### BREVE DESCRIPTION DES DESSINS

D'autres avantages, buts et caractéristiques particulières de la présente invention ressortiront de la description qui va suivre, faite, dans un but explicatif et nullement limitatif, en regard des dessins annexés, dans lesquels :
- la Figure 1 est un fer à cheval de l'art antérieur, ce fer en aluminium comportant trois pinçons ;
- la Figure 2 est une vue partielle et en perspective d'un fer à cheval selon un premier mode de réalisation de l'invention, ce fer étant pourvu d'un seul dispositif de butée ;
- la Figure 3 est une vue partielle et de profil du fer à cheval de la Fig. 2 ;
- la Figure 4 est une vue élargie et de dessus du fer à cheval de la Fig. 2 ;
- la Figure 5 est une vue schématique et en perspective d'une ferrure orthopédique selon un second mode de réalisation de l'invention, cette ferrure comporte un seul dispositif de butée ;
- la Figure 6 est une vue schématique et en perspective d'un dispositif de butée selon un troisième exemple, mais pas selon l'invention ;
- la Figure 7 est une vue partielle et de profil d'un fer à cheval selon un troisième mode de réalisation de l'invention ;
- La figure 8 est une vue partielle et de profil d'un dispositif de butée selon un quatrième mode de réalisation de l'invention ;
- La figure 9 est une vue schématique et en perspective d'un dispositif selon un quatrième mode de réalisation ;
- La figure 10 est une vue de dessus d'un fer à cheval comprenant un évidement définissant un logement apte à recevoir le dispositif de butée selon le quatrième mode de réalisation ;

### DESCRIPTION DETAILLEE DE MODE DE REALISATION DE L'INVENTION

Tout d'abord, on note que les figures ne sont pas à l'échelle.

Les Figures 2 à 4 représentent schématiquement un fer à cheval pourvu d'un dispositif de butée rapporté selon un premier mode de réalisation de la présente invention.

Ce fer 10 à cheval, ici intégralement réalisé en aluminium et sur mesure pour le pied d'un cheval spécifique, présente un évidement 11 débouchant, lequel est placée sur sa face supérieure destinée à venir en contact avec le sabot de ce cheval.

Cet évidement 11 définit un logement dans lequel l'unique patte 12 d'un dispositif 13 de butée est placée et fixée en position.

Cette patte 12 est prolongée par, et supporte, une languette 14 définissant un rebord du fer à cheval destiné à protéger la corne du côté de la pince, c'est-à-dire un pinçon. Cette languette 14 présente ici une forme triangulaire.

Le dispositif 13 de butée qui est ici d'un seul tenant et obtenu par exemple par pliage d'une plaque usinée, présente une section longitudinale droite ayant une forme de L.

L'évidement 11 débouchant vers l'extérieur du côté de la pince du fer à cheval est réalisé de sorte que cette patte 12 étant reçue dans celui-ci, la surface externe de cette patte 12 est placée en deçà ou est affleurant avec la surface externe environnante du fer 10 à cheval.

Cette patte 12 ayant une forme trapézoïdale, l'évidement présente une forme trapézoïdale obtenue par usinage, pour recevoir et loger celle-ci.

La forme trapézoïdale de la patte, ou semelle, du dispositif 13 de butée bloque le déplacement en translation de la patte 12 vers la pince du fer mais une rotation de celle-ci reste possible. Une fixation de la patte 12 par collage ou vissage est donc nécessaire.

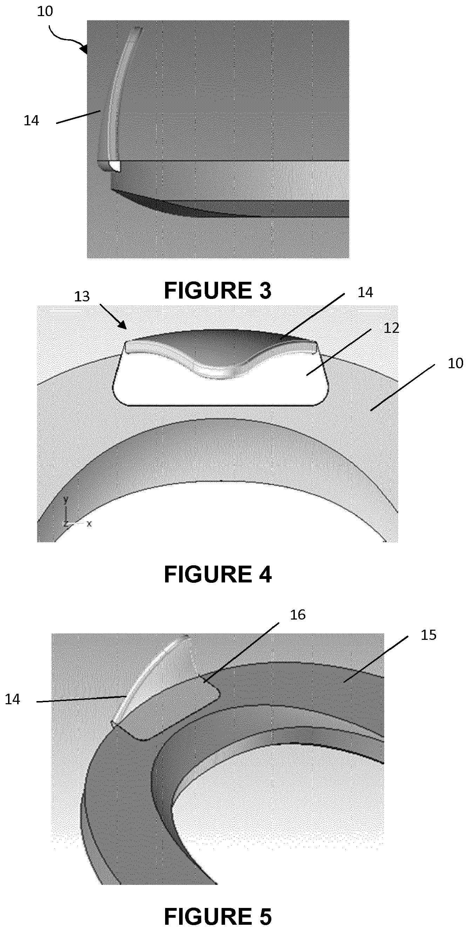

La Figure 5 est une vue schématique et en perspective d'une ferrure 15 orthopédique selon un second mode de réalisation de l'invention.

Cette ferrure 15 réalisée sur mesure pour le pied d'un cheval spécifique comporte un seul dispositif de butée. Les éléments portant les mêmes références que celles des Figures 2 à 4 représentent les mêmes objets. La ferrure 15 de la Figure 5 se distingue donc de celle représentée sur les Figures 2 à 4, non seulement en ce qu'elle est une ferrure en aluminium réalisée sur mesure, mais également parce que la patte 16 présente une forme rectangulaire. Si l'usinage de la ferrure 15 pour recevoir la patte 16, est relativement simple, la patte est mobile en translation dans son logement et peut pivoter, ce qui nécessite une solidarisation de celle-ci par collage, clouage ou encore soudure.

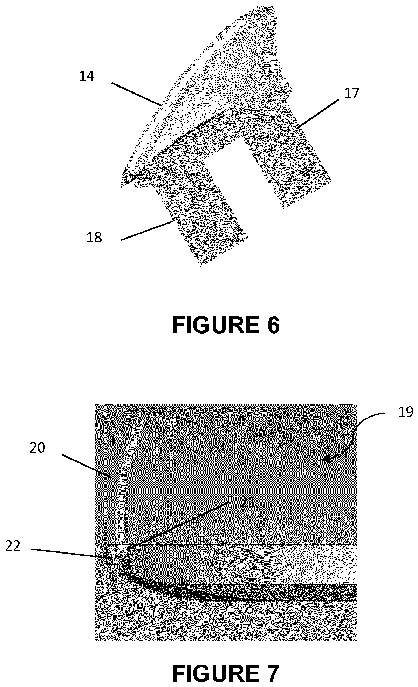

La Figure 6 est une vue schématique et en perspective d'un dispositif de butée, mais pas selon l'invention. Ce dispositif de butée réalisé ici en acier comporte deux pattes 17 et 18 espacées l'une de l'autre en définissant un angle entre elles. Chacune de ces pattes 17 et 18 est reçue dans un évidement débouchant correspondant réalisé sur la surface externe d'un fer à cheval.

La Figure 7 est une vue partielle et de profil d'un fer à cheval selon un troisième mode de réalisation de l'invention. Ce fer 19 à cheval comporte encore un dispositif de butée agencé au niveau de la pince de ce fer. Ce dispositif de butée comporte ici une pièce de montage supportant une languette 20 légèrement incurvée et formant un pinçon.

La pièce de montage qui présente une section transversale droite en forme de L, comporte une première patte 21 d'attache assemblée à la face supérieure de ce fer 19 à cheval et une deuxième patte 22 d'attache assemblée au pourtour extérieur du fer. La deuxième patte 22 est arrondie pour épouser la courbure du fer 19 à cheval, au niveau de son positionnement sur la pince.

L'assemblage du dispositif de butée et du fer à cheval, réalisé ici par clouage ou collage, assure un blocage en position du dispositif de butée.

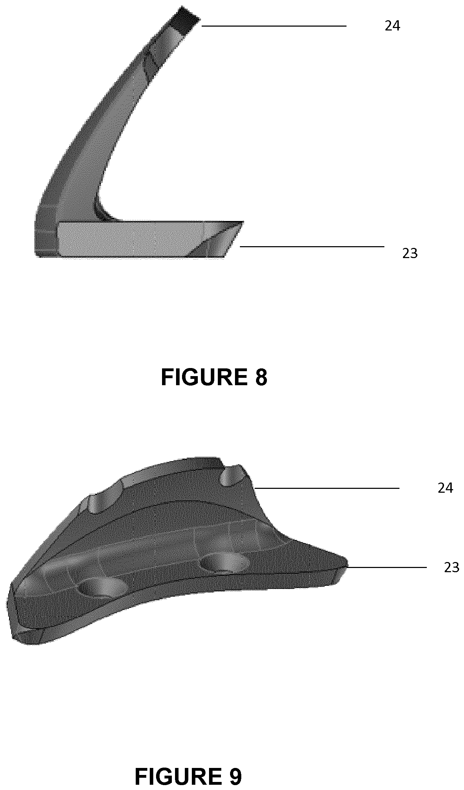

Les figures 8 et 9 représentent un dispositif de butée selon un quatrième mode de réalisation.

Ce dispositif de butée est réalisé ici en l'acrylonitrile butadiène styrène (ABS) renforcé par des fibres de carbone.

Ce dispositif de butée comprend une patte d'attache 23, et une languette de forme trapézoïdale, légèrement incurvée et formant pinçon 24.

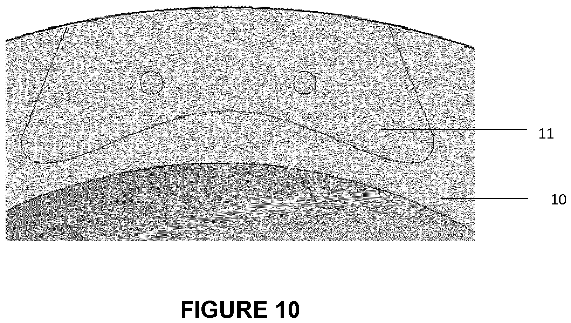

La figure 10 représente un évidement 11 d'un fer à cheval 10, l'évidemment définissant un logement dans lequel l'unique patte 23 du dispositif de butée selon un quatrième mode de réalisation est destinée à être reçue, ledit évidement ayant une forme identique et complémentaire de ladite patte. Avantageusement, l'évidement présente une profondeur garantissant que la surface extérieure de la patte selon le quatrième mode de réalisation reçue dans l'évidement ne forme pas saillie de la surface extérieure du fer mais soit de niveau avec cette dernière et de sorte que la surface intérieure du pinçon et la surface supérieure de la patte d'attache et donc de la surface supérieure dudit fer forme un angle α1 d'environ 55°.

## Revendications

1. Procédé de pose d'un fer à cheval dans lequel le fer à cheval ayant une surface supérieure comporte au moins un pinçon, le pinçon comprenant une surface intérieure inclinée formant un premier angle aigu (α1) avec la surface supérieure dudit fer, on déplace le pinçon pour ouvrir l'angle formé entre ladite surface intérieure et ladite surface supérieure, de sorte qu'après ouverture, un deuxième angle (α2) formé par la surface intérieure du pinçon et la surface supérieure du fer est strictement compris entre le premier angle (α1) et 90°, pour placer le pinçon en contact ou à proximité du sabot du cheval de manière à ce que ce dernier forme butée **caractérisé en ce que** ledit pinçon est réalisé dans un matériau thermoplastique, on chauffe préalablement ledit au moins un pinçon à une température (T) autorisant le déplacement du pinçon correspondant.

2. Procédé de pose d'un fer à cheval selon la revendication 1 **caractérisé en ce que** l'on fait glisser ledit fer à cheval le long de la surface du sabot en contact avec le sol de manière à placer le pinçon au contact du sabot du cheval pour ouvrir l'angle formé entre ladite surface intérieure dudit pinçon et ladite surface supérieure dudit fer à cheval

3. Procédé selon les revendications 1 ou 2, **caractérisé en ce que** le premier angle (α1) est compris entre 30° et 80°.

4. Procédé selon les revendications précédentes, **caractérisé en ce que** l'on choisit la température (T) de façon à ce qu'elle soit supérieure ou égale à la température de transition vitreuse dudit matériau thermoplastique.

5. Procédé selon les revendications précédentes, **caractérisé en ce que** ladite matière thermoplastique est choisie dans le groupe comprenant les acides polylactiques, les polyamides, l'acrylonitrile butadiène styrène, le polyéthylène téréphtalate glycolysé.

6. Procédé selon les revendications précédentes **caractérisé en ce que** l'on dirige de l'air chaud à au moins ladite température (T) sur au moins un des pinçons afin de permettre l'ouverture.

7. Fer à cheval (10) pour la mise en œuvre du procédé selon l'une quelconque des revendications 1 à 6, ledit fer à cheval ayant une surface supérieure et comprenant un ou plusieurs pinçons, ledit ou au moins un desdits pinçons comprenant une surface inférieure inclinée formant un premier angle aigu (α1) avec ladite surface supérieure, ledit ou au moins un desdits pinçons appartient à un dispositif de butée, ledit dispositif de butée comportant une pièce de montage rapportée et assemblée audit fer (10) à cheval, ladite pièce de montage supportant une languette (14, 20, 24) destinée à former ledit pinçon dudit fer à cheval après assemblage du dispositif de butée audit fer (10) à cheval, ladite pièce de montage comportant au moins une patte (12, 16, 21, 22, 23) d'attache, **caractérisé en ce que** le dispositif de butée est réalisé d'un seul tenant dans une matière thermoplastique.

8. Fer à cheval selon la revendication 7, **caractérisé en ce que** la matière thermoplastique est choisie parmi le groupe comprenant les acides polylactiques, les polyamides, l'acrylonitrile butadiène styrène, le polyéthylène téréphtalate glycolysé.

9. Fer à cheval selon la revendication 7 ou 8, **caractérisé en ce que** ladite au moins une patte (12, 16, 21, 22, 23) d'attache est intégralement évasée et présente sur au moins une partie de son pourtour destiné à être assemblé audit fer à cheval un contour en contre-dépouille.

10. Fer à cheval selon la revendication 9, **caractérisé en ce que** ladite au moins une patte possède une épaisseur (e), ladite patte comportant une face avant possède au moins un troisième angle (γ), formé entre un bord latéral de ladite patte et sa face avant, le troisième angle (γ) étant compris entre 105° et 120°, et ledit contour en contre-dépouille étant défini par un angle (δ) compris entre 13° et 17°.

11. Fer à cheval selon les revendications 7 à 10, **caractérisé en ce que** ladite patte possède une forme trapézoïdale.

12. Fer à cheval selon les revendications 7 à 11, **caractérisé en ce que** le fer à cheval est un fer sur mesure, ce dernier étant destiné à épouser la forme d'un sabot d'un cheval spécifique pour lequel il a été réalisé.

## Patentansprüche

1. Verfahren zum Anbringen eines Hufeisens, wobei das Hufeisen eine obere Fläche aufweist, welche wenigstens eine Kappe umfasst, wobei die Kappe eine geneigte innere Fläche aufweist, die einen ersten spitzen Winkel (α1) mit der oberen Fläche des Hufeisens bildet, wobei die Kappe bewegt wird, um den zwischen der inneren Fläche und der oberen Fläche gebildeten Winkel zu öffnen, so dass nach dem Öffnen ein zweiter Winkel (α2), der von der inneren Fläche der Kappe und der oberen Fläche des Eisens gebildet wird, genau zwischen dem ersten Winkel (α1) und 90° liegt, um die Kappe in Kontakt mit dem Pferdehuf oder in dessen Nähe zu bringen, so dass diese einen Anschlag bildet, **dadurch gekennzeichnet, dass** die Kappe aus einem thermoplastischen Material ausgeführt ist, wobei die wenigstens eine Kappe zuvor auf eine Temperatur (T) erhitzt wird, die es ermöglicht, die entsprechende Kappe zu bewegen.

2. Verfahren zum Anbringen eines Hufeisens Anspruch 1, **dadurch gekennzeichnet, dass** das Hufeisen entlang der oberen Fläche des Hufes in Kontakt mit dem Boden verschoben wird, um die Zange in Kontakt mit dem Huf des Pferdes zu bringen, um den zwischen der inneren Fläche der Kappe und der oberen Fläche des Hufeisens gebildeten Winkel zu öffnen.

3. Verfahren nach einem der Ansprüche 1 oder 2, **dadurch gekennzeichnet, dass** der erste Winkel (α1) zwischen 30° und 80° liegt.

4. Verfahren nach einem der vorhergehenden Ansprüche, **dadurch gekennzeichnet, dass** die Temperatur (T) derart gewählt wird, dass sie größer oder gleich der Glasübergangstemperatur des thermoplastischen Materials ist.

5. Verfahren nach den vorhergehenden Ansprüchen, **dadurch gekennzeichnet, dass** das thermoplastische Material gewählt ist aus der Gruppe, umfassend Polymilchsäuren, Polyamide, Acrylnitril-Butadien-Styrol und glykolisiertes Polyethylenterephthalat.

6. Verfahren nach den vorhergehenden Ansprüchen, **dadurch gekennzeichnet, dass** die Heißluft mit wenigstens der genannten Temperatur (T) auf wenigstens eine der Kappen gerichtet wird, um das Öffnen zu ermöglichen.

7. Hufeisen (10) zur Durchführung des Verfahrens nach einem der Ansprüche 1 bis 6, wobei das Hufeisen eine obere Fläche aufweist und eine oder mehrere Kappen umfasst, wobei die Kappe oder wenigstens eine der Kappen eine geneigte untere Fläche aufweist, die einen ersten spitzen Winkel (α1) mit der oberen Fläche bildet, wobei die Kappe oder wenigstens eine der Kappen zu einer Anschlagvorrichtung gehört, wobei die Anschlagvorrichtung ein Befestigungsteil umfasst, das an dem Hufeisen (10) angebracht und montiert ist, wobei das Befestigungsteil eine Zunge (14, 20, 24) trägt, welche dazu ausgebildet ist, die Kappe des Hufeisens nach der Montage der Anschlagvorrichtung an dem Hufeisen (10) zu bilden, wobei das Befestigungsteil wenigstens einen Befestigungsschenkel (12, 16, 21, 22, 23) umfasst, **dadurch gekennzeichnet, dass** die Anschlagvorrichtung in einem Stück aus einem thermoplastischen Material hergestellt ist.

8. Hufeisen nach Anspruch 7, **dadurch gekennzeichnet, dass** das thermoplastische Material gewählt ist aus der Gruppe, umfassend Polymilchsäuren, Polyamide, Acrylnitril-Butadien-Styrol und glykolisiertes Polyethylenterephthalat.

9. Hufeisen nach Anspruch 7 oder 8, **dadurch gekennzeichnet, dass** der wenigstens eine Befestigungsschenkel (12, 16, 21, 22, 23) einstückig aufgeweitet ist und an wenigstens einem Teil seines Umfangs, der dazu bestimmt ist, an dem Hufeisen montiert zu werden, eine hinterschnittene Kontur aufweist.

10. Hufeisen nach Anspruch 9, **dadurch gekennzeichnet, dass** der wenigstens eine Schenkel eine Dicke (e) aufweist, wobei der Schenkel eine vordere Fläche umfasst, die wenigstens einen dritten Winkel (γ) aufweist, der zwischen einer Seitenkante des Schenkels und seiner vorderen Fläche gebildet ist, wobei der dritte Winkel (γ) zwischen 105° und 120° beträgt und die hinterschnittene Kontur durch einen Winkel (δ) zwischen 13° und 17° begrenzt ist.

11. Hufeisen nach einem der Ansprüche 7 bis 10, **dadurch gekennzeichnet, dass** der Schenkel eine trapezförmige Form aufweist.

12. Hufeisen nach einem der Ansprüche 7 bis 11, **dadurch gekennzeichnet, dass** es sich bei dem Hufeisen um eine Maßanfertigung handelt, die dazu bestimmt ist, sich an die Form eines Hufes eines bestimmten Pferdes anzupassen, für das sie angefertigt wurde.

## Claims

1. Method for fitting a horseshoe in which the horseshoe having a top surface comprises at least one toe clip, the toe clip comprising an inclined inner surface forming a first acute angle (α1) with the top surface of said shoe, the toe clip is displaced to open the angle formed between said inner surface and said top surface, such that, after opening, a second angle (α2) formed by the inner surface of the toe clip and the top surface of the shoe is strictly between the first angle (α1) and 90°, to place the toe clip in contact with or in proximity to the hoof of the horse so that the latter forms an abutment, **characterized in that** said toe clip is produced in a thermoplastic material, said at least one toe clip is previously heated to a temperature (T) allowing displacement of the corresponding toe clip.

2. Method for fitting a horseshoe according to Claim 1, **characterized in that** said horseshoe is made to slip along the surface of the hoof in contact with the ground so as to place the toe clip in contact with the hoof of the horse to open the angle formed between said inner surface of said toe clip and said top surface of said horseshoe.

3. Method according to Claims 1 and 2, **characterized in that** the first angle (α1) is between 30° and 80°.

4. Method according to the preceding claims, **characterized in that** the temperature (T) is chosen such that it is greater than or equal to the glass transition temperature of said thermoplastic material.

5. Method according to the preceding claims, **characterized in that** said thermoplastic material is chosen from the group comprising the polylactic acids, polyamides, acrylonitrile butadiene styrene, polyethylene terephthalate glycol.

6. Method according to the preceding claims, **characterized in that** hot air at at least said temperature (T) is directed onto at least one of the toe clips in order to allow the opening.

7. Horseshoe (10) for implementing the method according to any one of Claims 1 to 6, said horseshoe having a top surface and comprising one or more toe clips, said or at least one of said toe clips comprising an inclined inner surface forming a first acute angle (α1) with said top surface, said or at least one of said toe clips belongs to an abutment device, said abutment device comprising a mounting piece added on and joined to said horseshoe (10), said mounting piece supporting a tongue (14, 20, 24) intended to form said toe clip of said horseshoe after the abutment device is joined to said horseshoe (10), said mounting piece comprising at least one attachment lug (12, 16, 21, 22, 23), **characterized in that** the abutment device is produced in a single piece with a thermoplastic material.

8. Horseshoe according to Claim 7, **characterized in that** the thermoplastic material is chosen from the group comprising the polylactic acids, polyamides, acrylonitrile butadiene styrene, polyethylene terephthalate glycol.

9. Horseshoe according to Claim 7 or 8, **characterized in that** at least one attachment lug (12, 16, 21, 22, 23) is fully flared and has, over at least a part of its perimeter intended to be joined to said horseshoe, an undercut outline.

10. Horseshoe according to Claim 9, **characterized in that** said at least one lug has a thickness (e), said lug comprising a front face has at least one third angle (γ), formed between a lateral edge of said lug and its front face, the third angle (γ) being between 105° and 120°, said undercut outline being defined by an angle (δ) of between 13° and 17°.

11. Horseshoe according to Claims 7 to 10, **characterized in that** said lug has a trapezoidal form.

12. Horseshoe according to Claims 7 to 11, **characterized in that** the horseshoe is a custom-made shoe, the latter being intended to fit the form of a hoof of a specific horse for which it has been made.
